(19) Europäisches Patentamt
European Patent Office
Office européen des brevets

(11) Veröffentlichungsnummer: **0 461 422 A2**

# (12) EUROPÄISCHE PATENTANMELDUNG

(21) Anmeldenummer: **91108117.2**

(22) Anmeldetag: **18.05.91**

(51) Int. Cl.5: **C08L 71/12**, C08L 67/02, C08L 69/00, C08L 77/00, C08L 53/00, C08K 5/20

(30) Priorität: **09.06.90 DE 4018549**

(43) Veröffentlichungstag der Anmeldung:
**18.12.91 Patentblatt 91/51**

(84) Benannte Vertragsstaaten:
**DE FR GB IT NL**

(71) Anmelder: **HÜLS AKTIENGESELLSCHAFT**
**Patentabteilung / PB 15 - Postfach 13 20**
**W-4370 Marl 1(DE)**

(72) Erfinder: **Kowalczik, Udo, Dr.**
**Am Nordbad 106**
**W-4630 Bochum 1(DE)**
Erfinder: **Mügge, Joachim, Dr.**
**Kantstrasse 14**
**W-4358 Haltern(DE)**
Erfinder: **Bartmann, Martin, Dr.**
**Elper Weg 64**
**W-4350 Recklinghausen(DE)**

## (54) Thermoplastische Formmassen auf Basis von Polyphenylenethern und Polyestern.

(57) Ziel war die Herstellung von Formmassen, die sich durch sehr gute Lösemittelbeständigkeit, hohe Zähigkeit und gute Homogenität auszeichnen. Diese Aufgabe wurde gelöst durch Formmassen, die folgende Komponenten enthalten:

(a) 10 bis 60 Gewichtsteile Polyphenylenether,
(b) 0 bis 40 Gewichtsteile Styrolpolymerisate,
(c) 90 bis 40 Gewichtsteile lineare Polyester,
(d) 0,2 bis 5 Gewichtsteile eines bestimmten Imids als Kupplungsmittel,
(e) 0 bis 50 Gewichtsteile Polycarbonate und/oder Polyamide,
(f) 0 bis 40 Gewichtsteile Schlagzähkomponenten und
(g) gegebenenfalls übliche Zusatzstoffe.

Die Formmassen lassen sich zu Formkörpern, wie Rohre, Platten, Gehäuse und sonstige technische Artikel, verarbeiten.

EP 0 461 422 A2

Gegenstand der vorliegenden Erfindung sind thermoplastische Formmassen, die als wesentliche Bestandteile Polyphenylenether (PPE) und lineare Polyester sowie eine spezifische Menge eines Kupplungsmittels enthalten.

Polyphenylenether sind technische Hochleistungsthermoplaste mit hohen Schmelzeviskositäten, die sich durch sehr gute hydrolytische Stabilität, hohe Wärmeformbeständigkeit, niedrige thermische Expansionskoeffizienten und gute dielektrische Eigenschaften auszeichnen. Nachteilig wirkt sich jedoch in vielen Anwendungsbereichen die geringe Beständigkeit gegenüber organischen Lösemitteln aus.

Dieses Problem kann im Prinzip durch Schmelzemischungen des Polyphenylenethers mit hochkristallinen Polymeren, welche eine hohe Widerstandsfähigkeit gegenüber solchen Lösemitteln aufweisen, gelöst werden. Derartige hochkristalline Polymere sind z. B. Polyester, insbesondere Polyalkylenterephthalate.

Die Schmelzemischung dieser Polyester mit dem Polyphenylenether ergibt jedoch äußerst spröde und inhomogene, zur Delaminierung neigende Blends. Typischerweise enthalten diese sehr große, unvollständig dispergierte PPE-Teilchen in der Polyester-Matrix. Als eine der Ursachen für die schlechten Eigenschaften dieser Blends werden die extrem unterschiedlichen Schmelzeviskositäten des PPE's einerseits und der Polyalkylenterephthalate andererseits angenommen.

Zusätzlich verstärkt wird dieser Effekt bei Polyestern mit geringer Thermostabilität [z. B. Polybutylenterephthalat (PBT)] durch eine thermische Schädigung der Matrix bei der Herstellung dieser Blends.

Die bisher in der Literatur beschriebenen Methoden versuchen gute Blends durch den Einsatz geeigneter Verträglichkeitsvermittler herzustellen.

So beschreibt die DE-OS 31 02 263 z. B. PPE/PBT-Mischungen, welche als Zusatzkomponenten z. B. Styrol-Maleinsäureanhydrid-Copolymere und eventuell zusätzlich Schlagzähmacher enthalten. Die dort präsentierten Ergebnisse vermögen jedoch aufgrund ihrer schlechten Kerbschlagzähigkeit nicht zu überzeugen.

In der EP-OS 0 253 332 wird die Herstellung eines Polyester/Polyphenylenether-Blends durch den Einbau von Doppelbindungen in den Polyester, z. B. durch Copolykondensation mit Malein- oder Fumarsäure, beschrieben. Nachteilig ist, daß derartige Polyestertypen nicht handelsüblich sind und beim Polyesterproduzenten eine teure Produktionsumstellung erfordern. Mechanische Kenndaten derartiger Blends werden in dieser Anmeldung nicht angegeben.

Gegenstand der EP-OS 0 268 981 sind Formmassen, die aus einem Polyester, einem Polyphenylenether und einem mit Glycidylmethacrylat funktionalisierten und hydrierten Blockcopolymeren aus einer aromatischen Vinylkomponente sowie einer konjugierten Dien-Verbindung bestehen. Die Zähigkeit der erhaltenen Formmassen reicht aber für viele Anwendungen nicht aus.

In der EP-OS 0 212 439 wird vorgeschlagen, den Polyphenylenether durch epoxidgruppenhaltige Verbindungen zu funktionalisieren und anschließend mit einem Polyester zu mischen. Die Funktionalisierung geschieht jedoch umständlich mit Epichlorhydrin in Lösung.

Die aus dem Stand der Technik bekannten Formmassen sind also entweder nur auf aufwendige Weise herstellbar oder im Eigenschaftsbild unbefriedigend. Ziel der Erfindung war es, diese Nachteile zu vermeiden.

Mit der vorliegenden Erfindung lassen sich Formmassen auf der Basis Polyester und Polyphenylenether herstellen, welche sich durch sehr gute Lösemittelbeständigkeit, hohe Zähigkeit und gute Homogenität auszeichnen.

Hierbei wird mit Hilfe geeigneter Substanzen die Schmelzeviskosität des Polyesters angehoben und ein thermischer Abbau verhindert. Darüber hinaus erfolgt eine gute Dispergierung des Polyphenylenethers in der Matrix und eine gute Phasenanbindung.

Die erfindungsgemäßen Formmassen enthalten folgende Komponenten:

(a) 10 bis 60 Gewichtsteile Polyphenylenether,

(b) 0 bis 40 Gewichtsteile Styrolpolymerisate,

(c) 90 bis 40 Gewichtsteile lineare Polyester,

wobei die Summe aus (a) und (b) 10 bis 60 Gewichtsteile und die Summe aus (a), (b) und (c) 100 Gewichtsteile ergibt;

(d) 0,2 bis 5 Gewichtsteile eines nachfolgend beschriebenen Kupplungsmittels,

(e) 0 bis 50 Gewichtsteile Polycarbonate und/oder Polyamide,

(f) 0 bis 40 Gewichtsteile Schlagzähkomponenten und

(g) gegebenenfalls übliche Zusatzstoffe.

Geeignete Kupplungsmittel besitzen dabei folgende allgemeine Strukturformel:

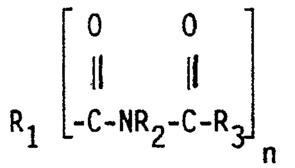,

wobei

$R_1$ = aromatischer oder gesättigter aliphatischer Rest mit 1 bis 20 C-Atomen,

$R_2$ und $R_3$ = aromatischer oder bevorzugt gesättigter aliphatischer Rest mit 1 bis 12 C-Atomen

oder

$R_2$ und $R_3$ = $-(CH_2)_m$ mit m = 3 bis 11

und

n = 2 oder 3 ist.

Derartige Substanzen sind im Fall n = 3 z. B. N,N',N''-Triacetyl-N,N',N''-trimethyltrimesinsäuretriamid und im bevorzugten Fall n = 2 z. B. Iso- oder Terephthaloylbiscaprolactam oder Iso- oder Terephthaloylbislaurinlactam.

Diese Imide können nach verschiedenen, dem Stande der Technik entsprechenden Verfahren hergestellt werden (siehe M.K. Akkapeddi et al. in "Recent Advances in Anionic Polymerization", T. E. Hoegen Esch and J. Smid (Ed.), Elsevier 1987, Seiten 318 bis 328).

Als Polyphenylenether kommen Polymere in Frage, die aus folgenden Einheiten aufgebaut sind:

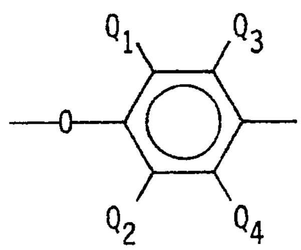

Hierbei sind $Q_1$ und $Q_2$ entweder Alkylreste mit 1 bis 10 C-Atomen, die vorzugsweise primär sind, Cycloalkylreste mit 5 bis 10 C-Atomen, Benzylreste mit 7 bis 10 C-Atomen oder Arylreste mit 6 bis 10 C-Atomen. $Q_3$ und $Q_4$ können die gleiche Bedeutung wie $Q_1$ und $Q_2$ haben; vorzugsweise bedeuten sie jedoch Wasserstoff.

Diese Polyphenylenether können nach jedem dem Stand der Technik entsprechenden Verfahren hergestellt werden. Üblicherweise werden die entsprechenden Phenole mit einem Sauerstoff enthaltenden Gas, wie z. B. Luft, in Gegenwart eines Katalysatorkomplexes oxidativ gekuppelt. Bei Einsatz eines in para-Stellung halogenierten Phenols muß eine ausreichende Menge an Säureacceptor anwesend sein. Vorzugsweise werden als Katalysatoren Kupfer-Amin-Komplexe oder manganhaltige Systeme benutzt (DE-OSS 32 24 691 und 32 24 692 sowie US-PSS 3 306 874, 3 306 875 und 4 028 341). Die Viskositätszahlen J, bestimmt nach DIN 53 728 in Chloroform bei 25 °C, liegen im Bereich von 20 bis 80 $cm^3/g$ (Konzentration 5 g/l), vorzugsweise im Bereich von 40 bis 70 $cm^3/g$.

Zur Herstellung dieser Polyphenylenether können beispielsweise folgende Monomere eingesetzt werden: 4-Brom-2,6-dimethylphenol, 2-Methyl-6-ethylphenol, 2,6-Diethylphenol, 2-Methyl-6-tert.-butylphenol, 4-Brom-2,6-diphenylphenol, 2-Benzyl-6-methylphenol, 2,6-Dibenzylphenol, 2,3,6-Trimethylphenol oder bevorzugt 2,6-Dimethylphenol. Selbstverständlich können auch Gemische derartiger Phenole verwendet werden.

Mit umfaßt werden natürlich auch modifizierte Polyphenylenether, z. B. Pfropfcopolymere mit Vinylmonomeren, Styrol oder anderen Modifizierungsreagenzien.

Selbstverständlich kann der Polyphenylenether dem Stand der Technik entsprechend auch geregelt sein, beispielsweise mit 2,4,6-Trimethylphenol, 2-(4-Hydroxy-3,5-dimethylphenyl)-ethanol oder 4-Benzyl-2,6-dimethylphenol. Hierbei ist jedoch darauf zu achten, daß durch die Regelung das Molekulargewicht hoch genug bleibt, um eine Viskositätszahl J im obengenannten Bereich zu ergeben.

Das als Komponente (b) verwendete Styrolpolymerisat muß mit dem Polyphenylenether verträglich sein. Beispielsweise können folgende Polymere verwendet werden: glasklares Polystyrol; Copolymere von Styrol mit maximal ca. 5 Gewichtsprozent anderer Monomerer, wie α-Methylstyrol, Maleinsäure-, Acryl- oder Methacrylsäurederivate, beispielsweise Acrylamid, Acryl- oder Methacrylsäure, Methylmethacrylat, Hydroxyethylmethacrylat, Maleinsäureanhydrid, Maleinsäureimide oder Acrylnitril; schlagzähes Polystyrol (HIPS) oder Pfropfprodukte der vorstehend beschriebenen Copolymeren auf einen Kautschuk.

Die als Komponente (c) verwendeten linearen Polyester enthalten Struktureinheiten der Formel

$$-O-R_4-O-\overset{\overset{\displaystyle O}{\|}}{C}-R_5-\overset{\overset{\displaystyle O}{\|}}{C}- \quad ,$$

wobei
$R_4$ = divalenter aliphatischer oder alicyclischer Kohlenwasserstoffrest mit 2 bis 12 und bevorzugt 2 bis 8 C-Atomen
und
$R_5$ = divalenter aromatischer Rest mit 6 bis 20 C-Atomen ist.

Als Diolkomponente kommen hier beispielsweise Ethylenglykol, Trimethylenglykol, Tetramethylenglykol, Hexamethylenglykol, 1,4-Cyclohexandimethanol und Neopentylglykol und als Dicarbonsäurekomponente beispielsweise Isophthalsäure, Terephthalsäure, 2,6-, 2,7-, 1,5-, 1,4-Naphthalindicarbonsäure, Diphensäure und Diphenylether-4,4'-dicarbonsäure in Frage. Ein Teil dieser Diolkomponente kann in bekannter Weise durch eine Verbindung

$$HO\!\left(R_6-O\right)_x\!H$$

mit x mindestens gleich 10 ersetzt werden, wobei $R_6$ eine zweiwertige gesättigte Gruppe mit 2 bis 4 C-Atomen bedeutet. Genauso können maximal 20 Mol-% der Dicarbonsäurekomponente durch aliphatische Dicarbonsäuren mit 2 bis 12 C-Atomen, wie z. B. Bernsteinsäure, Malein- oder Fumarsäure, Adipinsäure, Sebacinsäure und Dodecandisäure ersetzt sein.

Die Darstellung dieser Polyester erfolgt üblicherweise durch Kondensation eines Diols, z. B. Ethylenglykol, 1,4-Butandiol oder 1,4-Cyclohexandimethanol mit einer aromatischen Dicarbonsäure, wie z. B. Isophthal- oder Terephthalsäure oder deren Ester. Bevorzugt werden als Polyester Polyethylenterephthalat oder Polybutylenterephthalat verwendet.

Verfahren zur Herstellung dieser Polyester sind in der Literatur ausführlich beschrieben (z. B. Ullmanns Enzyklopädie der technischen Chemie, 4. Auflage, Band 19, Seite 66 ff., sowie DE-OS 24 07 155 und DE-OS 24 07 156).

Die thermoplastischen Formmassen können zusätzlich weitere Polykondensate, wie z. B. Polycarbonate und/oder Polyamide, enthalten.

Als Polycarbonate kommen insbesondere die aromatischen Typen in Frage, die dem Fachmann allgemein bekannt sind; vgl. z. B. Kirk-Othmer, Encyclopedia of chemical technology, 3. Auflage, Vol. 18, John Wiley & Sons (1982), Seite 479 bis 494. Sie werden durch Reaktion eines Bisphenols mit einer Carbonatvorstufe, wie Phosgen, einem Chlorkohlensäureester oder Kohlensäureester erhalten. Typische Bisphenole sind Bisphenol A, Bisphenol T, Tetramethylbisphenol A oder Tetramethylbisphenol S. Das bevorzugte Polycarbonat ist das Homopolymere, das sich von Bisphenol A herleitet.

Als Polyamide kommen Homo- und Copolymere in Frage, die vorzugsweise ausschließlich aliphatischer Struktur sind. Insbesondere seien hier die 6-, 46-, 66-, 612-, 1010-, 1012-, 11-, 12- und 1212-Polyamide aufgeführt. Die Kennzeichnung der Polyamide entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegeben, so bedeutet dies, daß von einer Aminocarbonsäure bzw. deren Lactam ausgegangen wird (H. Domininghaus, "Die Kunststoffe und ihre Eigenschaften", VDI Verlag, 1976, Seite 272). Geeignet sind aber auch gemischte aliphatisch-aromatische Copolyamide (vgl. US-PSS 2 071 250, 2 071 251, 2 130 523, 2 130 948, 2 241 322, 2 312 966, 2 512 606, 3 393 210; Kirk-Othmer, Encyclopedia of chemical technology, Vol. 18, John Wiley & Sons (1982), Seiten 328 und 435). Das Zahlenmittel des Molekulargewichts der Polyamide sollte über 5 000, vorzugsweise über 10 000, liegen.

Als gegebenenfalls in den erfindungsgemäßen Formmassen enthaltene Schlagzähkomponenten sind beispielsweise folgende Verbindungen geeignet: Ethylen-Propylen-Copolymere (EPM), Ethylen-Propylen-Dien-Terpolymere (EPDM), Polypentenylen, Polyoctenylen oder Blockcopolymere aus alkenylaromatischen Verbindungen mit Olefinen oder Dienen. Bevorzugt werden bei den Blockcopolymeren Produkte aus Styrol mit Butadien, Isopren bzw. Ethylen/Butylen. Ganz besonders bevorzugt sind Triblockcopolymere mit

Polystyrol-Endblöcken. Derartige Verbindungen sind kommerziell erhältlich, z. B. von der Shell Chemical Company unter dem Markennamen KRATON$^R$.

Die Schlagzähkomponente kann dem Stand der Technik entsprechend funktionalisiert sein, z. B. mit Maleinsäureanhydrid, Acrylsäure oder Glycidylmethacrylat.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel, sowie Verstärkungsmittel enthalten. Der Anteil der Verstärkungsmittel kann bis zu 50 %, der der Flammschutzmittel bis zu 15 % und der aller übrigen Zusatzstoffe insgesamt bis zu 10 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. In Frage kommen dabei Halogen enthaltende organische Verbindungen, wie sie z. B. in der Monographie von H. Vogel "Flammfestmachen von Kunststoffen", Hüthig-Verlag, 1966, auf den Seiten 94 bis 102 beschrieben werden. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes von halogenhaltigen Flammschutzmitteln empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas- und Kohlenstoffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Die Herstellung dieser Formmassen erfolgt zweckmäßigerweise durch Mischen dieser Komponenten bei Temperaturen im Bereich von 230 bis 330 °C in üblichen Mischvorrichtungen, wie z. B. Knetern oder Extrudern.

Die Reihenfolge des Mischens der Komponenten kann beliebig variiert werden, es können mehrere Komponenten vorgemischt oder auch alle gemeinsam verarbeitet werden.

Die erhaltenen Formmassen lassen sich mit den für die Thermoplastverarbeitung üblichen Verfahren, wie z. B. Spritzgießen und Extrusion, zu Formkörpern verarbeiten.

Beispiele für technische Anwendungsgebiete sind Rohre, Platten, Gehäuse und sonstige technische Artikel für den Automobil-, Elektro- und Feinwerksektor.

Die Viskositätszahl J des Polyphenylenethers wurde nach DIN 53 728 bei 25 °C in Chloroform gemessen (Konzentration: 5 g/l).

Die Viskositätszahl J des Polybutylenterephthalats wurde nach DIN 53728 bei 25 °C in o-Dichlorbenzol/Phenol (je 50 Gewichtsteile) gemessen (Konzentration: 5 g/l).

## Beispiele

1. Als Polyphenylenether wurden eingesetzt:
   - $A_1$: ein Poly(2,6-dimethyl-1,4-phenylenether)-Granulat mit einem J-Wert von 61 $cm^3/g$
   - $A_2$: ein Poly(2,6-dimethyl-1,4-phenylenether)-Pulver mit einem J-Wert von 52 $cm^3/g$
2. Als Polyesterkomponenten wurden eingesetzt:
   - $B_1$: VESTODUR$^R$ 1000 (Hüls AG)
   - $B_2$: VESTODUR$^R$ 1000 Mahlpulver (Hüls AG)
3. Als Schlagzähkomponenten wurden eingesetzt:
   - $C_1$: KRATON$^R$ G (Shell Chemical Co.)
   - $C_2$: VESTENAMER$^R$ 8012 (Hüls AG) (Polyoctenylen)
4. Als Imid wurde eingesetzt:
   - D : Terephthaloylbislaurinlactam
5. Als weitere Komponenten wurden eingesetzt:
   - E : Maleinsäureanhydrid
   - F : m-Phenylenbisoxazolin
   - G : LEXAN$^R$ 145 (Polycarbonat der GEP auf der Basis von Bisphenol A)

Die in der Tabelle angegebenen Gewichtsteile der einzelnen Komponenten wurden auf einem Doppelschneckenextruder Leistritz LSM 30.34 geschmolzen, gemischt und granuliert. Die Schneckenkonfiguration wurde so gewählt, daß eine innige Vermischung der Komponenten gewährleistet war. Zur Entfernung

gegebenenfalls auftretender flüchtiger Produkte wurde die Schmelze durch Anlegen eines verminderten Drucks über einen Entgasungsstutzen entgast. Die Produkte wurden zu Normkörpern verspritzt und die Reißdehnung ($\epsilon_R$) nach DIN 53 455 geprüft.

Tabelle

(Angaben in Gewichtsteilen)

| | 1*) | 2 | 3 | 4 | 5*) | 6 | 7 | 8 | 9*) | 10 |
|---|---|---|---|---|---|---|---|---|---|---|
| $A_1$ | 40 | 40 | 40 | 40 | 40 | 36 | - | - | 40 | 40 |
| $A_2$ | - | - | - | - | - | - | 40 | 36 | - | - |
| $B_1$ | 60 | 60 | 60 | 60 | 60 | 60 | - | - | 60 | 60 |
| $B_2$ | - | - | - | - | - | - | 60 | 60 | - | - |
| $C_1$ | - | - | - | - | - | - | 10 | - | - | - |
| $C_2$ | - | - | - | - | - | 4 | - | 4 | - | - |
| D | - | 2 | 4 | 2 | - | 2 | 2 | 2 | - | 2 |
| E | - | - | - | - | - | 0,5 | - | - | - | - |
| F | - | - | - | 1 | 1 | - | - | - | - | - |
| G | - | - | - | - | - | - | - | - | 5 | 5 |
| $\epsilon_R$ | < 1 | 6 | 8 | 10 | < 1 | 25 | 26 | 16 | 3 | 16 |

*) nicht erfinderische Vergleichsversuche

Wie aus der Tabelle hervorgeht, weisen die erfindungsgemäßen Massen eine wesentlich verbesserte Reißdehnung auf, was ein Indiz für eine gute Phasenanbindung ist.

Transmissionselektronenmikroskopische (TEM-)Aufnahmen bestätigen dies. Die Abbildung 1 zeigt anhand einer TEM-Aufnahme der Probe 2, daß der Polyphenylenether im Polyester fein dispergiert ist.

Der Vergleich zwischen den Proben 2 und 4 zeigt den positiven Effekt eines Zusatzes an einem Bisoxazolin. Der synergistische Effekt bei gleichzeitigem Zusatz der Komponente (d) und einem Bisoxazolin, das vorzugsweise zu maximal 5 Gewichtsprozent, bezogen auf die gesamte Formmasse, zugegeben wird, ist ein weiterer Aspekt der vorliegenden Erfindung.

Hierfür sind neben m-Phenylenbisoxazolin beispielsweise auch p-Phenylenbisoxazolin, Tetramethylenbisoxazolin, Octamethylenbisoxazolin, Decamethylenbisoxazolin oder 2,2'-Bisoxazolin geeignet.

**Patentansprüche**

1. Thermoplastische Formmassen, die folgende Komponenten enthalten:
   (a) 10 bis 60 Gewichtsteile Polyphenylenether,
   (b) 0 bis 40 Gewichtsteile Styrolpolymerisate,
   (c) 90 bis 40 Gewichtsteile lineare Polyester,
   wobei die Summe aus (a) und (b) 10 bis 60 Gewichtsteile und die Summe aus (a), (b) und (c) 100 Gewichtsteile ergibt;
   (d) 0,2 bis 5 Gewichtsteile eines Kupplungsmittels der Formel

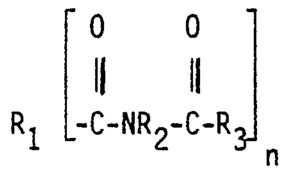

wobei
$R_1$ = aromatischer oder gesättigter aliphatischer Rest mit 1 bis 20 C-Atomen,
$R_2$ und $R_3$ = aromatischer oder bevorzugt gesättigter aliphatischer Rest mit 1 bis 12 C-Atomen
oder
$R_2$ und $R_3$ = $\{CH_2\}_m$ mit m = 3 bis 11
und
n = 2 oder 3 ist;

(e) 0 bis 50 Gewichtsteile Polycarbonate und/oder Polyamide,
(f) 0 bis 40 Gewichtsteile Schlagzähkomponenten und
(g) gegebenenfalls übliche Zusatzstoffe.

2. Formmassen gemäß Anspruch 1,
dadurch gekennzeichnet,
daß die Polyphenylenether aus folgenden Einheiten aufgebaut sind:

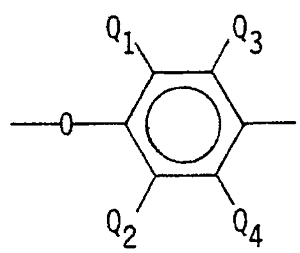

wobei $Q_1$ und $Q_2$ entweder Alkylreste mit 1 bis 10 C-Atomen, die vorzugsweise primär sind, Cycloalkylreste mit 5 bis 10 C-Atomen, Benzylreste mit 7 bis 10 C-Atomen oder Arylreste mit 6 bis 10 C-Atomen darstellen; $Q_3$ und $Q_4$ können die gleiche Bedeutung wie $Q_1$ und $Q_2$ haben sowie vorzugsweise Wasserstoff bedeuten.

3. Formmassen gemäß den Ansprüchen 1 und 2,
dadurch gekennzeichnet,
daß ein Polyphenylenether auf Basis von 2,6-Dimethylphenol enthalten ist.

4. Formmassen gemäß den Ansprüchen 1 bis 3,
dadurch gekennzeichnet,
daß die linearen Polyester Struktureinheiten der Formel

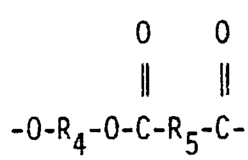

enthalten, wobei
$R_4$ = divalenter aliphatischer oder alicyclischer Kohlenwasserstoffrest mit 2 bis 12 und bevorzugt 2 bis 8 C-Atomen und
$R_5$ = divalenter aromatischer Rest mit 6 bis 20 C-Atomen ist.

5. Formmassen gemäß den Ansprüchen 1 bis 4, dadurch gekennzeichnet, daß als lineare Polyester Polyethylenterephthalat oder Polybutylenterephthalat verwendet werden.

6. Formmassen gemaß den Ansprüchen 1 bis 5, dadurch gekennzeichnet, daß in der Komponente (d) n gleich 2 ist.

7. Formmassen gemäß den Ansprüchen 1 bis 6, dadurch gekennzeichnet, daß als Komponente (d) Terephthaloylbislaurinlactam oder Terephthaloylbiscaprolactamverwendet wird.

8. Formmassen gemäß den Ansprüchen 1 bis 7, dadurch gekennzeichnet, daß als Komponente (f) Triblockcopolymere mit Polystyrol-Endblöcken oder Polyoctenylen eingesetzt werden.

9. Formmassen gemäß den Ansprüchen 1 bis 8, dadurch gekennzeichnet, daß als weiterer Zusatzstoff ein Bisoxazolin enthalten ist.

10. Verfahren zur Herstellung der Formmassen gemäß den Ansprüchen 1 bis 9, dadurch gekennzeichnet, daß die Komponenten bei Temperaturen im Bereich von 230 bis 330 °C gemischt werden.

11. Aus den Formmassen gemäß den Ansprüchen 1 bis 9 hergestellte Formkörper.

Abbildung 1

TEM-Aufnahme der Probe 2

Disperse Phase: Polyphenylenether; kohärente Phase: Polyester

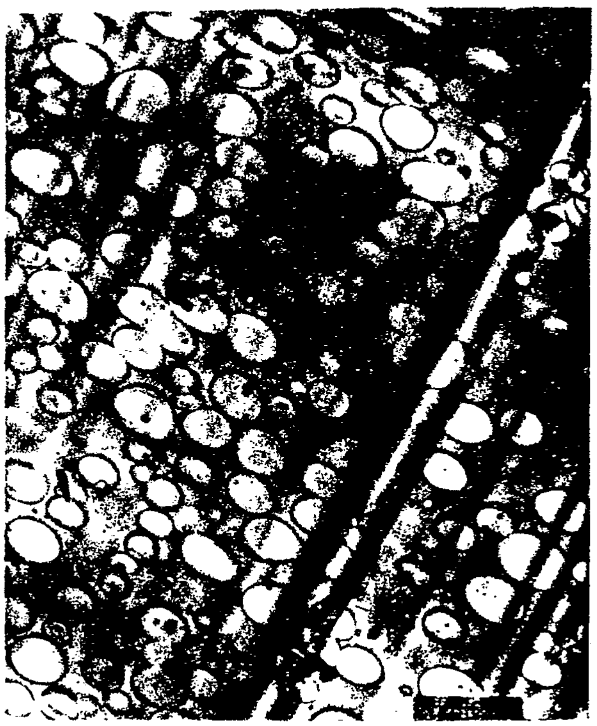

5 µm

4 900 : 1